(19) Europäisches Patentamt
European Patent Office
Office européen des brevets

(11) EP 1 855 418 A1

(12) **EUROPEAN PATENT APPLICATION**

(43) Date of publication:
**14.11.2007 Bulletin 2007/46**

(51) Int Cl.:
***H04L 12/28*** (2006.01)

(21) Application number: **07009206.9**

(22) Date of filing: **08.05.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **10.05.2006 US 432139**

(71) Applicant: **Robert Bosch GmbH**
**70442 Stuttgart (DE)**

(72) Inventors:
• **Srinivasan, Bhaskar**
  **CA 90832**
  **San Pedro (US)**

• **Keshavarzian, Abtin**
  **94306 Palo Alto (US)**
• **Lal, Dhananjay**
  **PA**
  **15206 Pittsburgh (US)**

(74) Representative: **Knapp, Thomas**
**Dreiss, Fuhlendorf,**
**Steimle & Becker,**
**Patentanwälte,**
**Postfach 10 37 62**
**70032 Stuttgart (DE)**

(54) **Method and system for adaptive link monitoring in wireless sensor networks**

(57)   A method and system for adaptively monitoring a communication link of a wireless sensor network, which includes measuring a quality of the communications link at a beginning of the monitoring period and at an end of the monitoring period, decreasing the monitoring period if a change in the quality of the communication link measured at the beginning and end of the monitoring period exceeds a predefined threshold value, and increasing the monitoring period if the measured quality is essentially the same at the beginning and end of the monitoring period.

200

SENSOR/ACTUATOR — 201

MICROCONTROLLER — 202

RADIO TRANSCEIVER — 203

SIGNAL PROCESSING — 204

BATTERY — 205

Figure 2

**Description**

FIELD OF THE INVENTION

The present invention relates to a method and system for adaptively monitoring a link in a wireless sensor network.

BACKGROUND INFORMATION

A wireless sensor network may be implemented as a distributed system having several nodes, each equipped with a wireless radio transceiver, application-specific sensors/actuators, and signal processing hardware. The nodes in a wireless sensor network may need to be small and inexpensive, and therefore the amount of communication and computationaources included in each node may be limited. For example, the sensor nodes may be equipped with relatively low-power transceivers whose transmission range is limited. Consequently, communication between nodes may occur via one or more neighboring nodes, sometimes referred to as "multi-hop" communications.
Designing a robust protocol for low power wireless sensor networks may be a challenging task since in many instances the wireless communication links may not always be reliable. In this regard, the quality of a wireless communication link may generally depend on factors such as the distance between nodes, the frequency channel used, and the noise level. Moreover, the quality of a wireless communication link may change over time so that a link that is initially usable may be inaccessible over time.
The quality of an RF communication link may be affected by many different factors, including factors such as multi-path fading and shadowing. For example, in an office environment, the movement of furniture or people may change the quality of a wireless link. Likewise, interference from a cordless phone, a wireless Local Area Network (LAN), or any other wireless network operating in the same frequency band, may affect the quality of data communication in a wireless sensor network.
By employing methods such as using multiple frequencies or multiple paths to send a data packet, a more robust network may be achieved. For example, when a network node receives a message, it may send the message to its assigned parent node using a predetermined default frequency. If the transmission is unsuccessful, a backup frequency may be used instead. If the transmission using the backup frequency also fails, the sender node may then try to send the message via a different communications path of the network, which may involve initially sending the message to a different network node.
To design a robust protocol, it may be essential to monitor the link quality regularly, especially the quality of any primary links established by the protocol. Here, the primary links may be those links, for example, which are used most frequently, and whose status may undergo change based on the periodically monitoring of the link. In this regard, link monitoring may be a routine task of the network, or it may be combined with other tasks or operations performed by the network. Accordingly, a portion of a network node's resources may be reserved to monitor link quality. Ideally, the instantaneous link quality of all links in the network would be measured, however, this may involve very frequent monitoring requiring a prohibitive amount of the nodes resources and/or energy.
A purported efficient method of link monitoring is discussed by Keshavarzian et al. in "Energy-efficient Link Assessment in Wireless Sensor Networks," In Proc. of INFOCOM 2004, Hong Kong, March 2004. A purported method for incorporating frequency channel assessment in link monitoring is discussed in U.S. Patent Application Serial No. 11/293,491, entitled "Link Assessment and Frequency Monitoring in Wireless Sensor Networks", which was filed on December 12, 2005. These purported methods, however, do not provide insight into how often the link monitoring needs to be performed.

SUMMARY OF THE INVENTION

The present invention provides an exemplary method and system for adaptively varying a link monitoring period based, for example, on an amount of change in link quality.
According to an exemplary embodiment and/or exemplary method of the present invention, if the link quality remains the same over all links, or nearly all links, then the link monitoring rate is decreased such that the link monitoring is performed less often. Otherwise, if there is a significant change in link quality, as measured, for example, by two successive link quality measurements, then the link monitoring rate is increased such that the link monitoring occurs more often. Hence, such an adaptation of the link monitoring rate may conserve the network resources, while at the same time providing for a more rapid detection when the need arises.
An exemplary embodiment and/or exemplary method of the present invention is directed to a method for adaptively monitoring a communication link of a wireless sensor network, in which a quality of the communications link is measured at a beginning of a monitoring period and at an end of the monitoring period, the monitoring period is decreased if a change in the quality of the communication link measured at the beginning and end of the monitoring period exceeds a predefined threshold value, and the monitoring period is increased if the measured quality is approximately the same at the beginning and end of the monitoring period.

Another exemplary embodiment and/or exemplary method of the present invention is directed to a wireless sensor network having a plurality of nodes, the wireless sensor network including at least one node to measure a link quality of a communications link of the wireless sensor network at a beginning of a monitoring period and at an end of the monitoring period, in which the at least one node decreases the monitoring period if a change in the quality of the communications link measured at the beginning and end of the monitoring period exceeds a predefined threshold, and in which the at least one node further increases the monitoring period if the quality of the communications link measured at the beginning and end of the monitoring period remains approximately the same.

Yet another exemplary embodiment and/or exemplary method of the present invention is directed to a wireless network node including a measuring arrangement to measure a quality of a communications link of a wireless network at a beginning of a monitoring period and at an end of the monitoring period, a determining arrangement to determine a change in the quality of the communications link measured at the beginning and at the end of the monitoring period, and an adjusting arrangement to decrease the monitoring period if the change in the quality of the communications link measures at the beginning and at the end of the monitoring period exceeds a predefined threshold, and to increase the monitoring period if the quality of the communications link measured at the beginning and at the end of the monitoring period remains essentially the same or decreases.

According to still another exemplary embodiment and/or exemplary method of the present invention, the wireless network node further includes a sensor arrangement to sense an environmental condition, and/or an actuator arrangement for actuating a component of the wireless network node.

According to yet another exemplary embodiment and/or exemplary method of the present invention, the wireless network node is constrained to operate on limited resources, and/or the measured link quality of the communications link includes at least one of a packet success rate, a signal-to-noise ratio and a bit error rate.

BRIEF DESCRIPTION OF THE DRAWINGS

Figure 1 shows an exemplary method for adaptively monitoring a communication link of a wireless network, including, for example, a communication link between two or more nodes of a wireless sensor network.

Figure 2 shows an exemplary wireless network node according to the present invention.

DETAILED DESCRIPTION

The present invention provides an exemplary method and system for adaptively determining the periodic interval between two link monitoring phases. In this regard, two opposing forces may operate to determine an optimal period for link monitoring. First, significant changes in the quality of links should be detected quickly, which may require frequent link monitoring. Second, where there is no significant change in link quality over a certain period of time, effort expended to monitor link quality may waste network resources. Accordingly, the link monitoring period may be determined adaptively based on feedback from the network on how often link quality is changing.

According to an exemplary embodiment of the present invention, the rate at which the link monitoring is performed, that is, the periodicity of the link monitoring, is variable and is determined by the network. In this regard, the link monitoring rate determines how often link monitoring is performed, which may encompass a wide range of values, such as, for example, once every 15 minutes to once each week. The link monitoring rate may be computed, for example, by a central node of the network (e.g., a base station), or the link monitoring may be computed by all nodes of the network in a distributed manner.

According to an exemplary embodiment of the present invention, the link monitoring rate is determined based on how much change is observed in the link quality as compared to previous measurements of the link quality. If the link quality remains essentially the same, then the monitoring rate is decreased so that link monitoring is performed less often, which may conserve resources, including, for example, power/battery resources. Otherwise, if there is a significant change in link quality, as measured, for example, over two successive measurements of link quality, then the link monitoring rate is increased so that future changes in the network are detected and reacted to more rapidly.

According to an exemplary embodiment, other activities in the network may trigger a higher link monitoring rate. For example, if too many packets are lost within a certain period of time, or if an interferer (e.g., a jammer) is detected over certain frequency bands, the link monitoring rate may be increased.

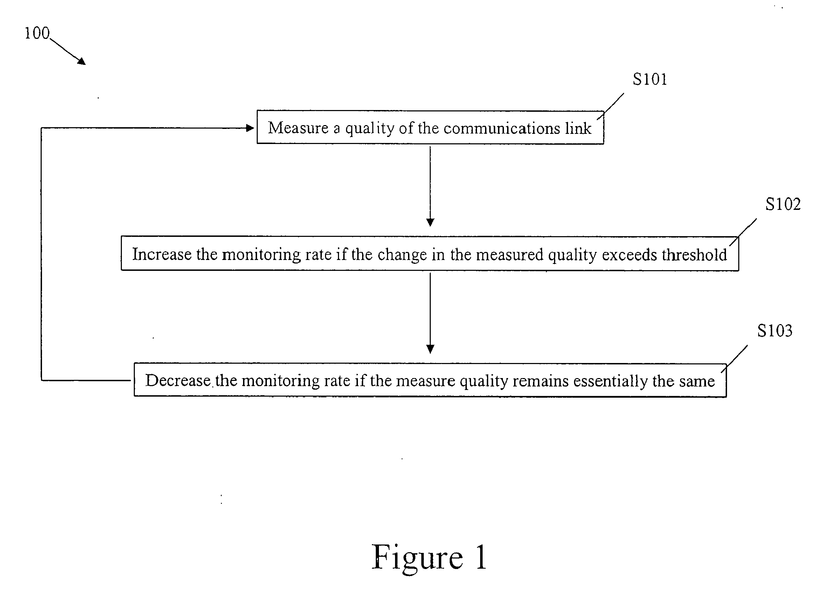

Figure 1 shows an exemplary method 100 for adaptively monitoring a communication link of a wireless network, including, for example, a communication link between two or more nodes of a wireless sensor network. In step S101, a quality of the communications link is measured at a beginning of the monitoring period and at an end of the monitoring period. Here the quality of the communications link may include, for example, a packet transmission success rate, a noise level, and/or a level of interference due to the transmissions of other wireless devices/networks. In this regard, the communications link quality may be measured, for example, in a centralized manner by at least one node of the wireless sensor network (e.g., a base station), or alternatively in a distributed manner by a plurality of nodes of the wireless sensor network.

In step S102, the monitoring period is increased if a change in the quality of the communication link measured between two successive monitoring attempts exceeds a predefined threshold value. Here, the change may include, for example, a marked decrease in the packet transmission success rate, an increased noise level, and/or increased interference from other networks/wireless devices. Otherwise, in step S103, the monitoring period is decreased, or left unchanged, if the measured quality is essentially the same at the beginning and end of the monitoring period. Thereafter, steps S101 through S103 are repeated as necessary and/or required.

According to an exemplary embodiment of the exemplary method 100 for adaptively monitoring a communications link of a wireless network, the monitoring period may be limited within a certain range, as shown below.

$$T_{mon\_MIN} \leq T_{mon} \leq T_{mon\_MAX}$$

Here $T_{mon\_MIN}$ is a minimum enforced interval between two link monitoring phases dictated by system energy requirements, and $T_{mon\_MAX}$ is a maximum interval between two link monitoring phases dictated by the system requirements to ensure that topology information is not stale. In this regard, the monitoring period $T_{mon}$ may be adjusted, for example, as follows:

$$T_{mon} = T_{mon\_MIN} + T_{step}$$

Where

$$T_{step}(i) = \begin{cases} \min\{2T_{step}(i-1), T_{mon\_MAX}\} & \alpha < \alpha_{Th} \\ 0 & \alpha > \alpha_{Th} \end{cases}$$

Here $\alpha$ is a parameter that measures the degree of "dynamicness" of the links in the network. Based on the feedback received from the network nodes between two link monitoring phases, the base station determines parameter $\alpha$. If this parameter is greater than a certain threshold value, $\alpha_{Th}$, the inter-link monitoring period is set to the minimum. If, however, the parameter is less than the threshold, $T_{mon}$ is incremented by a standard step size until it approaches $T_{mon\_MAX}$.

Hence, an exemplary embodiment of the present invention may be implemented as a closed feedback control system, where the link monitoring procedure is used to determine an optimum topology in the network. The determined optimum topology may then be used to perform certain functions of the network, including, for example, functions such as scheduling the distribution and/or collection of data within the network. In this regard, the efficiency with which data is distributed and/or collected is then monitored by the network nodes, and a degree of "dynamicness" of the links is then determined therefrom, which, in turn, may be used to determine the next time to perform link monitoring.

An exemplary embodiment and/or exemplary method of the present invention may be applied to different applications and network scenarios, where reliable communications is desired and/or required. Although additional overhead with respect to certain aspects of the network system may be required, it is believed that over time an overall improvement in performance may be achieved since the exemplary adaptive link monitoring method according to the present invention may provide improved link and frequency utilization. In particular, it is believed that the exemplary adaptive link monitoring method according to the present invention may provide a more robust network with better and more appropriate use of the best available links and/or frequencies, and at the same time conserves certain resources of the network, including, for example, energy and computational power.

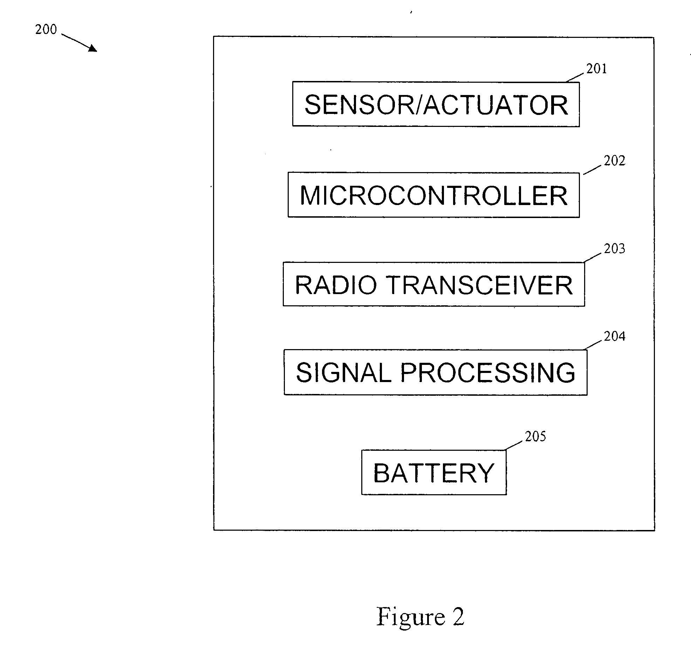

Figure 2 shows an exemplary network node 200 according to the present invention. The exemplary network node 200 may be, for example, a wireless sensor node. That is, the exemplary network node 200 may be equipped with one or more sensors/actuators, and constrained to operate on limited energy resources. Here, the exemplary network node 200 includes a sensor/actuator 201, a microcontroller 202, a radio transceiver 203, signal processing hardware 204 and a battery 205. The sensor/actuator 201 operates to sense an environmental condition and/or actuate upon an external or internal stimulus. The microcontroller 202 operates to perform overall control of the sensor/actuator 201, the radio transceiver 203, the signal processing hardware 204 and the battery 205. In this regard, the microcontroller 202 may include, for example, a microprocessor and program instructions in accordance with the exemplary method 100 of Figure 1, described above. The radio transceiver 203 operates to communicate on a frequency channel of the wireless network. The signal processing hardware 204 operates to process signals detected on the frequency channel by the radio transceiver 203. The battery 304 provides power to the exemplary network node 200, including power to each of the individual components, i.e., the sensor/actuator 201, the microcontroller 202, the radio transceiver 203 and signal processing hardware 204.

**Claims**

1. A method for adaptively monitoring a communication link of a wireless sensor network, the method comprising:

   (a) measuring a quality of the communications link at a beginning of a monitoring period and at an end of the monitoring period;
   (b) decreasing the monitoring period if a change in the quality of the communication link measured at the beginning and end of the monitoring period exceeds a predefined threshold value; and
   (c) increasing the monitoring period if the measured quality is approximately the same at the beginning and end of the monitoring period.

2. The method of claim 1, further comprising:

   repeating operations (a) through (c).

3. The method of claim 2, further comprising:

   providing a default monitoring period prior to performing operations (a).

4. The method of claim 3, further comprising:

   providing a minimum monitoring period; and
   providing a maximum monitoring period.

5. The method of claim 4, further comprising:

   limiting the increase of the monitoring period to below the maximum monitoring period; and
   limiting the decrease of the monitoring period to above the minimum monitoring period.

6. The method of claim 4, further comprising:

   setting the monitoring period to equal a sum of the minimum monitoring period and an incremental step for the current monitoring period as defined by the following equation:

$$T_{step}(i) = \begin{cases} \min\{2T_{step}(i-1), T_{mon\_MAX}\} & \alpha < \alpha_{Th} \\ 0 & \alpha > \alpha_{Th} \end{cases}$$

   wherein $T_{step}(i)$ is the incremental step for the current monitoring period, $T_{step}(i\text{-}1)$ is the incremental step for the previous monitoring period, $T_{mon\_MAX}$ is the maximum monitoring period, $\alpha$ is the measured quality of the communications link, and $\alpha_{Th}$ is the predefined threshold.

7. The method of claim 6, wherein $\alpha$ is the measured quality of the communications link with respect to at least one of the packet success rate, the signal-to-noise ratio and the bit error rate.

8. The method of claim 1, wherein the quality of the communications link includes a packet transmission success rate.

9. The method of claim 1, wherein the quality of the communications link includes a noise level.

10. The method of claim 1, wherein the quality of the communications link includes a level of interference.

11. The method of claim 1, wherein the quality of the communications link includes a bit error rate.

12. The method of claim 1, wherein the communications link quality is measured in a centralized manner by at least one node of the wireless sensor network.

13. The method of claim 1, wherein the communications link quality is measured in a distributed manner by a plurality of nodes of the wireless sensor network.

14. A wireless sensor network having a plurality of nodes, comprising:

   at least one node to measure a link quality of a communications link of the wireless sensor network at a beginning of a monitoring period and at an end of the monitoring period,
   wherein the at least one node decreases the monitoring period if a change in the quality of the communications link measured at the beginning and end of the monitoring period exceeds a predefined threshold, and
   wherein the at least one node further increases the monitoring period if the quality of the communications link measured at the beginning and end of the monitoring period remains approximately the same.

15. The wireless sensor network of claim 14, wherein the link quality of the communications link includes at least one of a packet success rate, a signal-to-noise ratio and a bit error rate.

16. A wireless network node, comprising:

   a measuring arrangement to measure a quality of a communications link of a wireless network at a beginning of a monitoring period and at an end of the monitoring period;
   a determining arrangement to determine a change in the quality of the communications link measured at the beginning and at the end of the monitoring period; and
   an adjusting arrangement to decrease the monitoring period if the change in the quality of the communications link measures at the beginning and at the end of the monitoring period exceeds a predefined threshold, and to increase the monitoring period if the quality of the communications link measured at the beginning and at the end of the monitoring period remains essentially the same or decreases.

17. The wireless network node of claim 16, further comprising:

   at least one of;
   a sensor arrangement to sense an environmental condition, and
   an actuator arrangement for actuating a component of the wireless network node.

18. The wireless network node of claim 17, wherein the wireless network node is constrained to operate on limited resources.

19. The wireless network node of claim 18, further comprising:

   a battery.

20. The wireless network node of claim 19, wherein the link quality of the communications link includes at least one of a packet success rate, a signal-to-noise ratio and a bit error rate.

EP 1 855 418 A1

100

S101

Measure a quality of the communications link

S102

Increase the monitoring rate if the change in the measured quality exceeds threshold

S103

Decrease the monitoring rate if the measure quality remains essentially the same

Figure 1

200

| SENSOR/ACTUATOR | 201 |
| MICROCONTROLLER | 202 |
| RADIO TRANSCEIVER | 203 |
| SIGNAL PROCESSING | 204 |
| BATTERY | 205 |

Figure 2

European Patent
Office

**EUROPEAN SEARCH REPORT**

Application Number

EP 07 00 9206

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,Y | KESHAVARZIAN A ET AL: "Energy-efficient link assessment in wireless sensor networks" INFOCOM 2004. TWENTY-THIRD ANNUALJOINT CONFERENCE OF THE IEEE COMPUTER AND COMMUNICATIONS SOCIETIES HONG KONG, PR CHINA 7-11 MARCH 2004, PISCATAWAY, NJ, USA,IEEE, vol. 3, 7 March 2004 (2004-03-07), pages 1751-1761, XP010740538 ISBN: 0-7803-8355-9 * page 1751, right-hand column, line 9 - page 1753, left-hand column, line 2 * ----- | 1-20 | INV. H04L12/28 |
| Y | WO 00/76233 A (ERICSSON TELEFON AB L M [SE]) 14 December 2000 (2000-12-14) * page 1, line 5 - page 2, line 9 * * page 5, line 1 - page 6, line 27 * * page 10, line 27 - page 14, line 35 * ----- | 1-20 | |
| A | GB 2 395 398 A (MOTOROLA INC [US]) 19 May 2004 (2004-05-19) * page 8, line 30 - page 9, line 9 * ----- | 1-20 | TECHNICAL FIELDS SEARCHED (IPC) H04L |
| A | CARDELL-OLIVER R ET AL: "Field Testing a Wireless Sensor Network for Reactive Environmental Monitoring" INTELLIGENT SENSORS, SENSOR NETWORKS AND INFORMATION PROCESSING CONFERENCE, 2004. PROCEEDINGS OF THE 2004 MELBOURNE, AUSTRALIA 14-17 DEC. 2004, PISCATAWAY, NJ, USA,IEEE, 14 December 2004 (2004-12-14), pages 7-12, XP010783733 ISBN: 0-7803-8894-1 section 1. Introduction ----- | 1-20 | |

The present search report has been drawn up for all claims

| Place of search | Date of completion of the search | Examiner |
|---|---|---|
| Munich | 8 August 2007 | Zembery, Peter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 00 9206

This annex lists the patent family members relating to the patent documents cited in the above-mentioned European search report.
The members are as contained in the European Patent Office EDP file on
The European Patent Office is in no way liable for these particulars which are merely given for the purpose of information.

08-08-2007

| Patent document cited in search report | | Publication date | Patent family member(s) | | Publication date |
|---|---|---|---|---|---|
| WO 0076233 | A | 14-12-2000 | AU<br>SE<br>SE | 5434900 A<br>514361 C2<br>9902093 A | 28-12-2000<br>12-02-2001<br>05-12-2000 |
| GB 2395398 | A | 19-05-2004 | AU<br>CN<br>WO<br>EP | 2003283440 A1<br>1711795 A<br>2004043101 A1<br>1563703 A1 | 07-06-2004<br>21-12-2005<br>21-05-2004<br>17-08-2005 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 293491 A

**Non-patent literature cited in the description**

- **KESHAVARZIAN et al.** Energy-efficient Link Assessment in Wireless Sensor Networks. *Proc. of IN-FOCOM 2004,* March 2004